(19) **Europäisches Patentamt European Patent Office Office européen des brevets**

(11) **EP 4 050 584 B1**

(12) **EUROPEAN PATENT SPECIFICATION**

(45) Date of publication and mention of the grant of the patent:
**11.06.2025 Bulletin 2025/24**

(21) Application number: **21159380.1**

(22) Date of filing: **25.02.2021**

(51) International Patent Classification (IPC):
**G08G 5/00** *(2025.01)*

(52) Cooperative Patent Classification (CPC):
**G08G 5/80; G08G 5/34; G08G 5/56**

(54) **METHOD FOR OPTIMIZING AN ARRIVAL STREAM OF AT LEAST TWO AIRCRAFT, CORRESPONDING DEVICE AND COMPUTER PROGRAM**

VERFAHREN ZUR OPTIMIERUNG EINES ANKUNFTSSTROMS VON MINDESTENS ZWEI FLUGZEUGEN, ENTSPRECHENDE VORRICHTUNG UND COMPUTERPROGRAMM

PROCÉDÉ D'OPTIMISATION D'UN FLUX D'ARRIVÉE D'AU MOINS DEUX AÉRONEFS, DISPOSITIF CORRESPONDANT ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.08.2022 Bulletin 2022/35**

(73) Proprietor: **Frequentis Orthogon GmbH 28207 Bremen (DE)**

(72) Inventors:
• **Kulesh, Mikhail**
  **28259 Bremen (DE)**
• **Wernsing, Heinrich**
  **28355 Bremen (DE)**

(74) Representative: **Eisenführ Speiser Patentanwälte Rechtsanwälte PartGmbB Postfach 10 60 78 28060 Bremen (DE)**

(56) References cited:
**EP-B1- 1 428 195          WO-A1-2017/013387
CN-B- 106 781 708          US-A1- 2013 110 388
US-A1- 2015 081 198**

**Description**

The invention relates to a method as set out in appended independent claim 1 for optimizing a stream of at least two aircraft forming at least one aircraft pair, a corresponding device for optimizing a stream of at least two aircraft forming at least one aircraft pair according to appended independent claim 12, and a computer program to perform the method when executed on a computer according to appended independent claim 13.

In air traffic control (ATC) a major goal is to safely guide aircraft through the airspace, which involves ensuring a proper separation between aircraft. Ensuring a proper separation is of crucial importance to avoid any situations that may lead to near-misses or even collisions. A proper separation typically involves a certain time or distance between one aircraft succeeding another on the same or a close route.

Due to the rising number of flight movements over the last decades, ATC and air traffic management (ATM) aim at ensuring and increasing safety when guiding aircraft through the airspace but also aim at providing an efficient air transportation system with regard to the utilization of airports, fuel burn and flight time.

When considering aircraft arrival flows towards an airport, or- more generically - a merging waypoint, to improve the number of aircraft that can utilize a merging waypoint or runway, target times can be allocated to aircraft.

The above is of particular relevance for aircraft that leave their cruising altitude, conduct a descent and finally approach a runway. Since for large airports, the runway capacity typically is one major bottleneck, so-called arrival managers are widely used in the prior art. These arrival managers calculate a target time for each aircraft to arrive at a merging point or the runway itself.

It is now one major challenge for the air traffic controller and air traffic management as such, to ensure that aircraft arrive at the merging waypoint or runway in time, since aircraft arriving at an entry waypoint of an airspace would typically not arrive at the runway at the requested time computed by the arrival manager following their optimal descent trajectory. In other words, air traffic controllers typically have to ensure that aircraft are delayed by a certain amount of time to arrive at the runway at the time computed by the arrival manager.

From the prior art, optimization models are known, for example from US 2015/0081198 A1 and EP 1 428 195 B1. Known models typically calculate target overflight times or arrival times for dedicated waypoints defining a route of an aircraft from the entry waypoint to the merging waypoint. US 2013/110388 A1 relates to a decision support tool to enable automated aircraft sequencing and conflict detection and resolution. The tool can be used to assist an air traffic controller (ATC) in determining merging, sequencing, and spacing resolutions; communicating the resolutions to the aircraft; and monitoring execution and compliance with the provided resolutions. CN 106 781 708 B discloses a route planning method and device for a terminal control area. From WO 2017/013387 A1, a method for detecting conflicts between aircraft flying in controlled airspace is known.

These optimization models might take into consideration the estimated entry time at the entry waypoint, a desired minimum time based separation between a pair of aircraft and a target time for each aircraft to arrive at the merging waypoint.

Known optimization models, however, typically consider the desired minimum time based separation between each pair of aircraft as a hard constraint, which might generate an optimization result that might not be optimal with regard to other operational parameters. For example, the optimization results might involve a higher fuel consumption due to accelerations and decelerations, as well as the requirement for aircraft to fly so-called holding procedures, which typically increase flight time and fuel consumption.

Therefore, it was an object of the invention to overcome these disadvantages known from the prior art as far as possible. In particular, it was an object of the invention to provide an optimization model, which allows a more flexible optimization approach.

According to the invention, it is proposed that the optimization model utilizes the desired minimum time based separation as a soft constraint. The invention is based on the finding that utilizing the desired minimum time based separation as a soft constraint allows the determination of optimized target arrival times at the one or more dedicated waypoints that take into account additional optimization criteria and therefore allow for a more holistic optimization of an aircraft stream.

The entry waypoint may be a generic waypoint characterizing a certain airspace or route segment. The merging waypoint may be an enroute waypoint, at which two routes merge, but it may also be a runway of an airport.

Furthermore, the invention is described herein with regard to the operation of a flow of aircraft within an airspace. The optimization method may, however, also be utilized for optimizing a flow of aircraft performing ground taxi operations. In this regard, the waypoints may be, for example, taxiway intersections or other fixed coordinates on taxiways, aprons or runways.

According to a preferred embodiment, the merging waypoint is a destination airport. In this case, the target time for each aircraft to arrive at the merging waypoint is the target time for each aircraft arrived at the runway. This time is typically computed by an arrival manager and is considered as an input for the optimization model.

According to the invention the optimization model considers maximizing a time based separation between each aircraft pair at the one or more dedicated waypoints considering the desired minimum time based separation as a first optimization goal. In this way, it is ensured that a proper separation is considered within the optimization model. In other words, generally a larger separation between each pair of aircraft gives a better optimization result than a smaller separation.

According to the invention the time based separation is maximized only up to the predefined desired separation. This means that a better optimization result is generated when the separation is increased in a range smaller than or equal to the desired separation. Maximizing the separation to values above the predefined desired separation, however, does not further improve the optimization result. In an example, where the desired minimum time based separation is two minutes, the optimization generates better results when a separation is improved from 1 minute 30 seconds to 2 minutes, but is not further improved when the separation is increased from 2 minutes to 4 minutes, for example.

According to another preferred embodiment, the optimization model furthermore considers one or more holding procedure durations for the one or more aircraft, wherein the holding procedure durations are used to delay said aircraft, and wherein the model considers minimizing said holding procedure durations as a second optimization goal.

Holding procedures can be additionally used to delay aircraft. In case, for example, an arriving aircraft has to absorb a high delay before reaching the merging waypoint, adjusting the aircraft speed alone might not be feasible, due to flight mechanical constraints. In this case, aircraft may be advised to fly so-called holding procedures. During these holding procedures, aircraft typically circle nearby a certain holding fix and are thereby delayed to finally arrive at the merging waypoint at the required target time.

This holding procedure duration, however, should be kept to the absolute minimum, due to the involved additional flight time, fuel burn and noise emissions. Therefore, said holding procedure durations for the one or more aircraft are considered as a second optimization goal within the optimization model.

According to another preferred embodiment, said method further comprises receiving a preferred overflight time for the at least one dedicated waypoint, and wherein the optimization model furthermore minimizes a difference between the preferred overflight time and the target arrival time for the at least one dedicated waypoint as a third optimization goal. Such preferred overflight times are typically defined by air navigation service providers or flow management systems and are a further possible input to the optimization model. In this regard, it is desirable to minimize a difference between the preferred overflight time and the target arrival time for each dedicated waypoint. This forms a third optimization goal.

According to another preferred embodiment, the optimization model furthermore comprises a cost function, wherein said cost function is configured for balancing some or all of said optimization goals with respect to one another, in particular by utilizing weighting factors associated with said optimization goals.

With the help of this cost function and the weighting factors, the model allows to consider a multitude of optimization goals and a prioritization of the same. For example, ensuring a proper separation may be considered as an important optimization goal, having a high weighting factor. For another scenario, however, it might be desirable to minimize the times aircraft are required to operate in a holding procedure. In this case, for example, it might be acceptable to not reach the desired separation for every approaching flight, and, for example, to provide a vertical separation between aircraft instead. In other words, said cost function and the associated weighting factors allow for a flexible prioritization of the optimization goals as required for a certain application.

According to another preferred embodiment, the optimization model further considers maximum and minimum flight durations and/or adjusted maximum and minimum flight durations between dedicated waypoints as a further constraint. These maximum and minimum flight durations may be limited by operational constraints and flight mechanical constraints.

According to another preferred embodiment, the maximum and minimum flight durations are determined by utilizing an aircraft maximum acceleration trajectory and/or the minimum clean trajectory, in particular received from the base or aircraft data (BADA). In other words, the maximum flight time on a direct route between two waypoints is limited by the aircraft aerodynamics and flight mechanics. Given that an aircraft arrives at a certain waypoint with a certain airspeed, utilizing the maximum acceleration gives the lowest possible arrival time at the next waypoint. On the other hand, an aircraft can only be slowed down to the minimum speed considering a clean configuration of the aircraft. A clean configuration is a configuration at which the aircraft would not utilize any high-lift devices such as flaps or slats.

According to another preferred embodiment, an adjusted minimum flight duration is calculated by utilizing the determined maximum flight duration and an additional configurable time to lose, and/or wherein an adjusted minimum flight duration is calculated by utilizing the determined minimum flight duration and an additional configurable time to gain. Said time to lose and time to gain may be realized for example by requesting the aircraft to fly shortcuts, also called "direct-to", that result in a shorter route to flown. This is an example of a time to gain.

To provide additional time to lose, air traffic controllers may utilize so-called vectoring procedures. With the help of these vectoring procedures that may be utilized in certain air spaces, aircraft may be delayed by increasing the flight distance between two dedicated waypoints, for example by requesting the aircraft to fly a non-direct trajectory between waypoints, to conduct a turn, or the like. This would be an example of a time to lose.

According to another preferred embodiment, the target arrival times at the one or more dedicated waypoints are recalculated. Such a recalculation may occur whenever the target time for an aircraft to arrive at the merging waypoint changes. In the example, in which the merging waypoint is the runway of the destination airport, a recalculation may be required in case for example the runway is blocked, traffic needs longer than anticipated to a land at the runway, or in case other traffic is delayed.

According to another preferred embodiment, target arrival times for one or more aircraft at one or more dedicated waypoints are excluded from a recalculation, in particular wherein a target arrival time associated with dedicated waypoints are excluded from a recalculation when a dedicated waypoint has already been overflown. This means in other words, that target overflight times are only recalculated for those dedicated waypoints that will still be overflown in the future. In case, for example, an aircraft has already passed two out of five dedicated waypoints, than those target overflight times will only be recalculated for the remaining three dedicated waypoints to be overflown.

According to another preferred embodiment, the optimization model considers a decrease in aircraft speed from the entry waypoint to the merging waypoint as a further constraint. This further constraint ensures that aircraft are not requested to, for example, decelerate when approaching a waypoint thereafter to accelerate again, and so on. This constraint is not only implemented for reasons of pilot and passenger comfort, but also due to reduced fuel burn and predictability for air traffic controllers and pilots.

The invention has hereinabove been described with reference to the method as defined in claim 1 in a first aspect of the invention. In a second aspect, however, the invention relates to a device as defined in claim 12.

The invention achieves the initially mentioned object in the second aspect by suggesting that a method according to the above embodiments is implemented on the processing unit. The advantages and preferred embodiments of the method of the first aspect are at the same time also advantages and preferred embodiments of the device of the second aspect. In order to avoid unnecessary repetition, reference is made to the description hereinabove. In a further aspect, the invention also relates to a computer program prepared to perform a method according to the previous embodiments when executed on a computer.

Also with regard to this aspect, preferred embodiments and advantages of the method of the first aspect are at the same time preferred embodiments and advantages of the computer program according to the invention. In order to avoid unnecessary repetition, reference is made to the description hereinabove for that reason.

For a more complete understanding of the invention, the invention will now be described in more detail with reference to the accompanying drawings. The detailed description will illustrate and describe or is considered as a preferred embodiment of the invention.

In particular, any reference signs in the claims shall not be construed as limiting the scope of the invention. The word "comprising" does not exclude other elements or steps. The wording "a" or "an" does not exclude a plurality.

The invention will now be described with reference to the accompanying drawings which illustrate, one of several possible embodiments proposed herein by way of example and not by way of limitation, and wherein:

Fig.1        shows a block diagram of an optimization method according to the concept of the invention;

Fig. 2       shows block diagram of an optimization model according to the concept of the invention;

Fig. 3       shows a schematic view of a predefined environment or airspace;

Figs. 4, 5   show examples of approach trajectories of one or two aircraft;

Fig. 6       shows a device according to the concept of the invention; and

Fig. 7       shows a computer program according to the concept of the invention.

Fig. 8       shows an alternative embodiment of an airspace according to the concept of the invention.

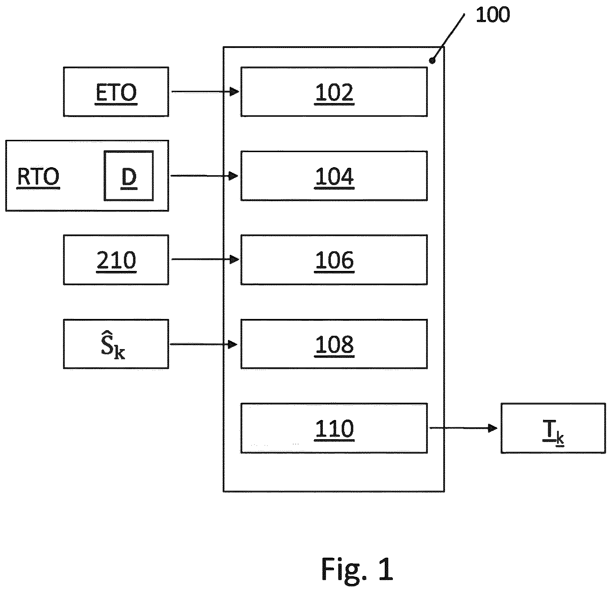

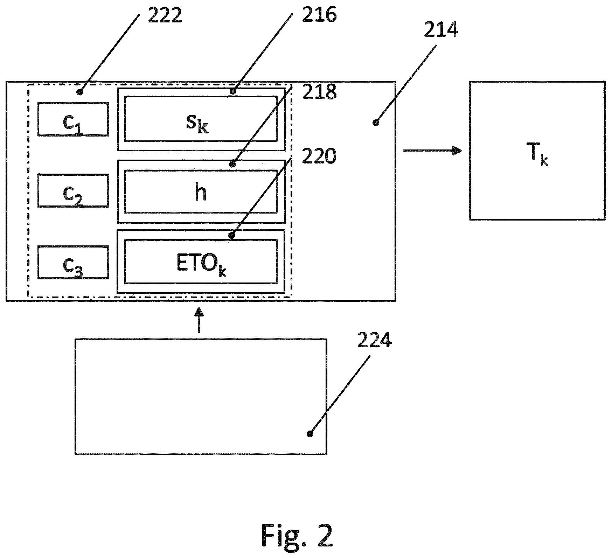

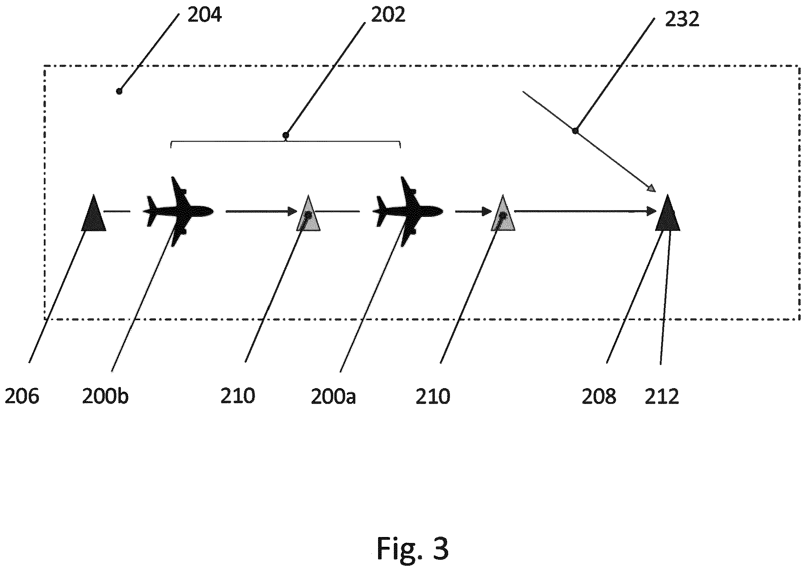

Figures 1 to 3 illustrate a method 100 for optimizing a stream of at least two aircraft 200a, 200b. In this regard, Fig. 1 shows a block diagram of said method 100 itself, Fig. 2 shows a block diagram of an optimization model 214 according to the invention and Fig. 3 shows a corresponding simplified airspace structure 204.

According to Fig. 3, a stream of at least two aircraft 200a, 200b forms at least one aircraft pair 202. Fig. 3 shows a stream of two aircraft 200a, 200b, said stream however may comprise a larger number of aircraft 200 that form different pairs 202. Each aircraft 200a, 200b enters a predefined environment or airspace 204 via an entry waypoint 206. From this entry waypoint 206, the aircraft 200a, 200b approach a common predefined merging waypoint 208. Between the entry waypoint 206 and the merging waypoint 208, enroute waypoints 210 are arranged. These enroute waypoints 210 comprise dedicated waypoints 210. Aircraft 200a, 200b proceed from the entry waypoint 206 via the enroute waypoints 210 to the merging waypoint 208. A further arrival stream 232 might lead to the merging waypoint 208. The merging waypoint 208 might also be the destination airport 212, in particular, a threshold of a runway of said destination airport 212, on which the aircraft 200a, 200b are intended to land.

Turning now to said optimization method 100 as explained in Fig. 1, said method 100 comprises the following steps: Receiving 102 an estimated entry time ETO for each aircraft 200a, 200b at the at least one entry waypoint 206, receiving, according to step 104, a target time for each aircraft 200a, 200b to arrive at the merging waypoint 208, which is the requested time over the merging waypoint (RTO), wherein said target time RTO comprises a delay D to be absorbed before reaching such merging waypoint 208.

Furthermore, according to step 106, routing information are received for each aircraft 200a, 200b. These routing information comprise waypoints 210 for routing said aircraft 200a, 200b from the entry waypoint 206 to merging waypoint 208 as shown in Fig. 3. Furthermore, according to step 108, a desired minimum time based separation $\hat{S}_k$ for each pair of aircraft 202 is defined.

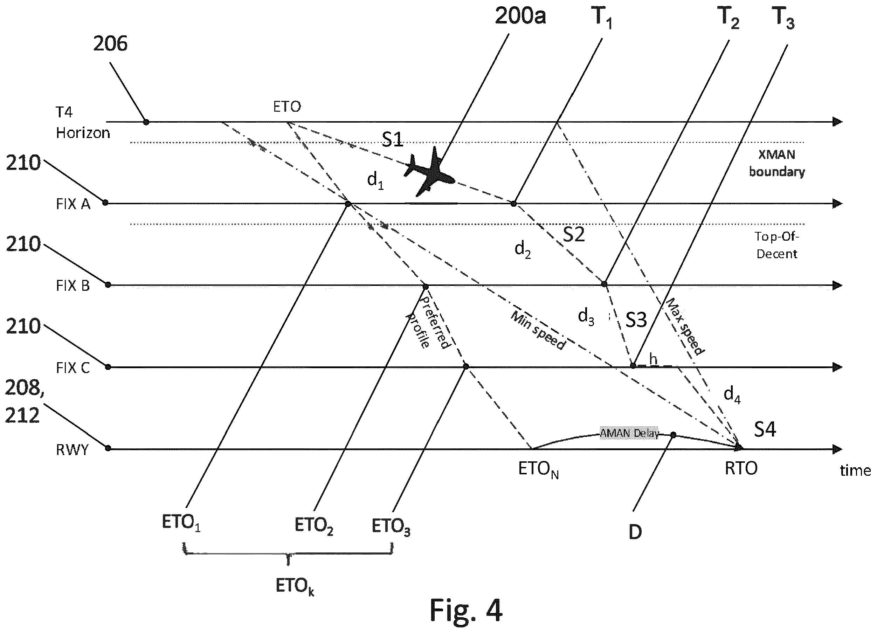

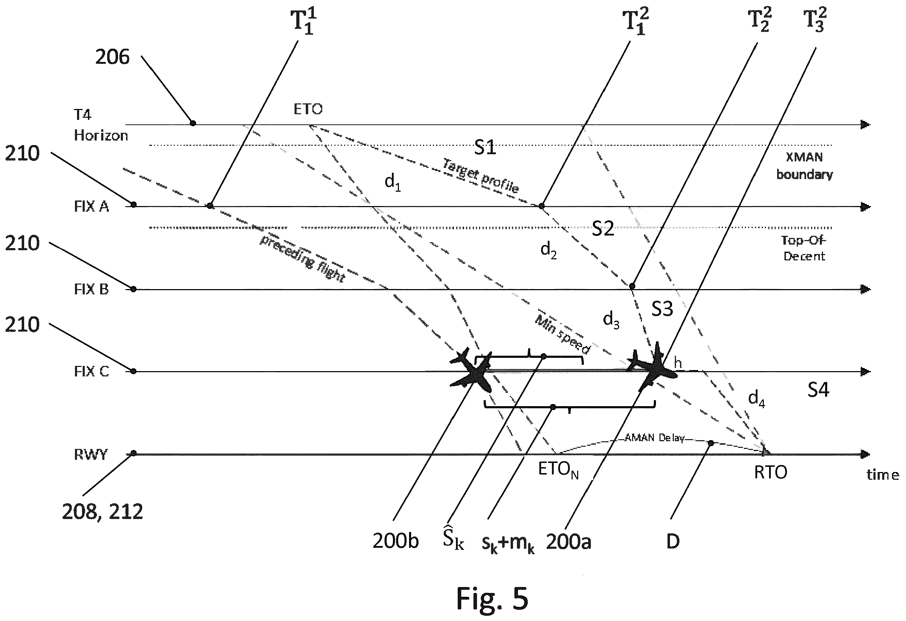

According to step 110, optimized target arrival times $T_k$, in particular target overflight times $T_k$, at the one or more dedicated waypoints 210 for the at least two aircraft 200a, 200b utilizing an optimization model 214 are determined. Said optimization model 214 considers the estimated entry time (ETO), the target time for each aircraft to arrive at the merging waypoint (RTO) and the desired minimum time based separation $\hat{S}_k$. The optimized target arrival times $T_k$ are determined such that the delay D to be absorbed for each aircraft 200a, 200b is shared between route segments defined by said dedicated waypoints 210. This delay sharing will be illustrated later on with regard to Fig. 4 and 5. The optimization model 214 utilizes the desired minimum time based separation $\hat{S}_k$ as a soft constraint, as shown in Fig. 2.

The optimization model 214 is detailed in Fig. 2. The optimization model comprises a cost function 222. The cost function 222 is configured for balancing optimization goals 216, 218, 220 with respect to one another. For balancing those optimization goals 216, 218, 220 weighting factors $c_1$, $c_2$, $c_3$ are associated with said optimization goals 216, 218, 220. According to the first optimization goal 216, the optimization model 214 considers maximizing a time based separation $s_k$ between each aircraft pair 202 at the one or more dedicated waypoints 210 considering the desired minimum time based separation $\hat{S}_k$. As already explained, said time based separation $s_k$ is utilized as a soft constraint.

The time based separation $s_k$ is maximized only up to the predefined desired separation $\hat{S}_k$. In other words, this means, that whenever the desired separation $\hat{S}_k$ is reached in the optimization solution, the solution would not get any better for separations higher than the desired minimum separation $\hat{S}_k$. As the second optimization goal 218, the optimization model 214 furthermore considers one or more holding procedure durations h for the one or more aircraft 200a, 200b. These holding procedure durations h and holding procedures as such are used to delay said aircraft 200a, 200b, for example with the help of a so-called holding patterns. At holding patterns, aircraft 200a, 200b typically circle nearby a certain waypoint utilizing a standard procedure. The optimization model 214 considers minimizing the holding procedure durations h as a second optimization goal 218.

Optionally, the method 100 furthermore comprises receiving a preferred overflight time $ETO_k$ for the at least one dedicated waypoint 210. These preferred overflight times $ETO_k$ might be generated by external sources. As a potential third optimization goal 220, the minimization of the difference between preferred overflight time $ETO_k$ and target arrival time $T_k$ at a certain dedicated waypoint 210 is considered.

The optimization model 214 might further consider maximum and minimum flight durations and/or adjusted maximum and minimum flight durations between dedicated waypoints 210 as a further constraint 224. These maximum and minimum flight durations are determined by utilizing aircraft 200a, 200b maximum acceleration trajectory and/or a minimum clean trajectory, in particular received from the base of aircraft data (BADA). An adjusted maximum flight duration might be calculated by utilizing the determined maximum flight duration and an additional configurable time to lose and/or an adjusted minimum flight duration may be calculated by utilizing the determined minimum flight duration and an additional configurable time to gain.

Furthermore, the target arrival times $T_k$ at the one or more dedicated waypoints 210 may be recalculated. In particular, target arrival times for one or more aircraft 200a, 200b at one or more dedicated waypoints 210 are excluded from a recalculation. This might be especially beneficial, when target arrival times $T_k$ associated with dedicated waypoints 210 have already been overflown. In addition, the optimization model 214 might consider a decrease in aircraft speed from the entry waypoint to the merging waypoint as a further constraint 224.

A vertical approach profile of an aircraft 200a approaching an entry waypoint 206 and thereafter a merging waypoint 208 via dedicated enroute waypoints 210 is shown in Fig. 4. Fig. 4 also explains the basic concept of the Streaming optimization algorithm. The optimization model 100 calculates or determines target overflight times $T_k$ at the dedicated waypoints 210. When an aircraft 200a enters the entry waypoint 206 at the estimated entry time ETO, then the optimization method 100 will calculate the optimized target overflight times $T_k$ at the dedicated waypoints 210.

In the scenario shown in Fig. 4, both, the estimated entry time ETO at the entry waypoint 206 and the target time to arrive at the merging waypoint 208, which is a destination airport 212 in this example, are provided to the optimization method 100. Due to the additional delay D to be absorbed, the aircraft 200a arriving at the entry waypoint 206 at the estimated entry time ETO cannot utilize its preferred profile defined by preferred overflight times $ETO_k$ ($ETO_{1-3}$ in Fig. 4) at the dedicated waypoints 210 to approach the destination airport 212. If the aircraft 200a would do so, this would result in arriving at the destination airport 212 well before the target time RTO to arrive at the merging waypoint 208 which is, in this case, equal to a target landing time (TLDT). Rather, the aircraft would arrive at the merging waypoint 208 at an estimated time $ETO_N$, which is unwanted.

In other words, the aircraft 200a has to divert from its preferred profile in order to absorb the delay D between the entry waypoint 206 and the merging or destination waypoint/airport 208, 212. This delay D to be absorbed is now "shared" between different enroute segments ($d_1$, $d_2$, $d_3$, $d_4$) between the dedicated waypoints 210. The shown max speed and min speed are examples of constraints 224 to be considered. As can be obtained from Fig. 4, not only variations in speed of the aircraft 200a may be utilized to delay said aircraft 200a, but also additional holding procedure durations h.

Fig. 5 shows the same scenario for aircraft 200a, but also considers a preceding flight of an aircraft 200b. The time based separation $s_k$ is optimized as already explained. In the example shown, the optimized time based separation $s_k$ is equal to the desired minimum time based separation $\hat{S}_k$. Furthermore, an additional "natural gap" $m_k$ is present between said aircraft 200a and 200b.

The optimization model 100 calculates or determines target overflight times $T_k^f$ at the dedicated waypoints 210, wherein the variable f characterizes the aircraft. For the aircraft 200a shown in the right of the figure, the notation $T_k^2$ is utilized. For the preceding aircraft 200b $T_k^1$ is used. The superscript f is used herein to distinguish between aircraft in general. However, the superscript has not been used in the description and the figures continuously to improve readability.

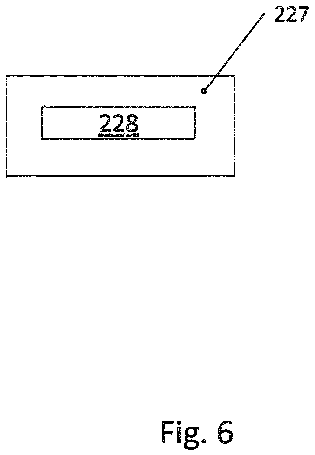

Fig. 6 shows a device 227 for optimizing a stream of at least two aircraft 200a, 200b forming at least one aircraft pair 202. The device 227 comprises a processing unit 228, which might be a microprocessor 228. The method 100, as described herein, is implemented on the processing unit 228.

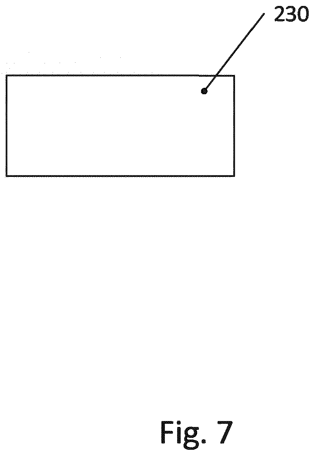

Fig. 7 shows a computer program 230. The computer program 230 is prepared to perform the method 100 according to the embodiments described herein.

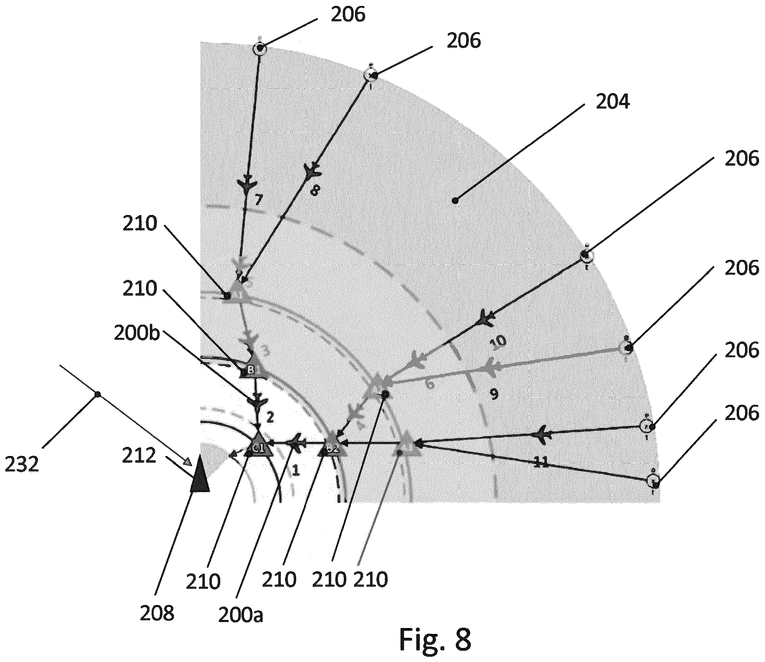

Fig. 8 shows an alternative embodiment of an airspace 204. Said airspace 204 comprises all elements shown in Fig. 3, but comprises a more complex structure of waypoints 206, 208, 210.

In particular, aircraft 200 may enter the airspace 204 via a multitude of entry waypoints 206. Waypoints 210 guide the aircraft from the entry waypoint 206 to a merging waypoint 208. This merging waypoint 208 is a common waypoint for all different arrival routes. Again, the merging waypoint 208 may be the destination airport 212, or lead to the destination airport 212, as shown in Fig. 8. Optionally, further arrival streams 232 may lead to the destination airport 212. In this case, for the optimization method 100, the destination airport would be considered as the merging waypoint 208 for the optimization. Optionally, the airspace 204 may also comprise additional arrival streams (not shown). The optimization method 100 is also capable of providing optimized overflight times $T_k$ for such a scenario.

In the following, the optimization method 100 will be described and explained utilizing mathematical formulations. Some of the explanations to follow make reference to Fig. 4. The formulas also include explanations regarding the conditions and rules to be considered. It is also noted that the claims and previous embodiments may use simplified formula or simplified variable expressions or parameters for illustrative purposes. In other words the formulas and expressions explained below may be different to some formulas or expressions used previously herein but still explain the same thing.

To begin with, the following definitions are given:

A Target profile (line comprising the aircraft 200a in Fig. 4) is the output profile where runway delay shall be fully absorbed using individual speeds for every route segment, target holding duration at holding point.

T4 is the entry waypoint. FIX A, FIX B, and FIX C (dedicated waypoints 210 in Fig. 4) are waypoints along the target profile. The Streaming optimization algorithm shall issue target times for all these points. The desired separation between flights on these points is a configuration parameter. If the desired separation cannot be achieved by the Streaming optimization algorithm, flights shall be separated manually by the controller using different flight levels.

FIX C is a holding point where a part of the runway delay can be absorbed. The variable h defines the holding duration. Holding entry time and holding exit time are target times that are calculated by the Streaming optimization algorithm. There is no restriction on the holding duration value.

The variable $d_1$ is the flight duration on the segment T4-A, $d_2$ is the duration for segment A-B, $d_3$ for B-C and d for C-RWY. The five durations ($d_1$ - $d_4$ and h) are unknown variables that will be found by the Streaming optimization algorithm via an optimization problem described below.

For the formulation of a mathematical model, the following notations are used:

N is the number of segments (route segments between dedicated waypoints, including runway), subscript k is the index of a dedicated waypoint. For every segment, its length is known and notated as $L_k$.

The speed of an individual flight shall not increase in succeeding segments, i.e. the speed on route segment S3 must be less or equal to the speed on route segment S2.

M is the number of flights. Superscripts f and p are the indices of two flights.

ETO$^f$ is the estimated overflight time of flight f on the entry waypoint, and $\text{ETO}^f_k$ is the preferred overflight time of flight f over the dedicated waypoint k, all given externally, for instance given by ETFMS or calculated using BADA model. $\left[\text{ETO}^f_{min,k}, \text{ETO}^f_{max,k}\right]$ are the earliest ETO and the latest ETO. Both can be given externally, for instance calculated using maximum acceleration trajectory and minimum clean trajectory from the base of aircraft data (BADA) model. Alternatively, earliest and latest ETO can be defined by a configurable time to loose per route segment $\text{TTL}_k$ and time to gain per route segment $\text{TTG}_k$:

$$\text{ETO}^f_{min,k} = \text{ETO}^f_k - \sum_{n=1}^{k} \text{TTG}_n$$

$$\text{ETO}^f_{max,k} = \text{ETO}^f_k + \sum_{n=1}^{k} \text{TTL}_n, \ \ 1 \leq k < N$$

RTO$^f$ is the target landing time for flight f to arrive at the RWY, $\text{ETO}^f_N$ is the estimated landing time based on preferred landing profile, both given externally. The runway delay of a flight is given by $D = \text{RTO}^f - \text{ETO}^f_N$ and shall be fully absorbed by the Streaming optimization algorithm. $\text{T}^f_k$ is the target overflight time for flight f at point k. This is an unknown variable that will be found by the Streaming optimization algorithm. $\widetilde{\text{T}}^f_k$ is the issued target time for flight f and point k. It is optionally given by external systems. When given, the target time, the dedicated waypoint respectively, for this flight is called frozen and the target time will be no more changed by the Streaming optimization algorithm. Typically a point will be frozen, when either the previously calculated target time or the actual time over this dedicated waypoint is in the past.

Additionally the following assumptions are made:
It is assumed that the order of flights on all points is known and given externally.

No overtaking between the flights will take place along the different route segments.

The following variables are introduced:

$\text{d}^f_k$, k = 1... N is the target flight duration of flight f for segment k.

$\text{s}^f_k$ is the separation term that represents the part of the separation to the preceding flight at dedicated waypoint k that will be optimized.

$\text{m}^f_k$ is a free variable representing an additional optional separation that covers a "natural gap" between two flights.

h$^f$ is the holding duration for flight f.

Additionally, there are some variables that depend on the state of the flight and can be defined before the algorithm is run:
The initial time of the flight is the estimated overflight time ETO$^f$ of the entry waypoint. If the entry waypoint is frozen the initial time is set to the issued target time over the entry waypoint:

$$\text{ETO}^f = \widetilde{\text{T}}^f_0 \ \text{ if the entry point is frozen.}$$

Additionally, if there are further frozen points, which is the case if there exist further issued target times $\widetilde{\text{T}}^f_k$, the target times and all other times for these frozen points will be fixed and the target times will be no longer optimized:

$$\text{T}^f_k = \text{ETO}^f_k = \text{ETO}^f_{min,k} = \text{ETO}^f_{max,k} = \widetilde{\text{T}}^f_k \ \ \text{ for all k where } \widetilde{\text{T}}^f_k \text{ is given.}$$

With the aid of the defined variables, we can couple the target time $T_k^f$ for flight f over dedicated waypoint k together with the flight specific durations, as follows:

$$T_k^f = ETO^f + \sum_{n=1}^{k} d_n^f, \qquad 1 \le k < N$$

$$T_N^f = ETO^f + h^f + \sum_{n=1}^{N} d_n^f,$$

where $T_N^f$ is the landing time that is calculated with respect to the holding duration and must meet the externally given target landing time (RTO).

The following set of constraints is applied to considered variables. These constraints ensure that every flight absorbs whole delay along the route, has a "physically" possible decent profile, and the actual distance between flights on every point is covered by optimized and optional separation terms:

The optimization algorithm does not use the speed of the aircraft directly, but uses the durations between two dedicated waypoints. The minimum and maximum durations $D_{min,k}^f, D_{max,k}^f$ are calculated with the externally given ETOs:

$$D_{min,k}^f = ETO_{min,k}^f - ETO_{min,k-1}^f,$$

$$D_{max,k}^f = ETO_{max,k}^f - ETO_{max,k-1}^f.$$

The flight duration for every segment is limited by minimum and maximum durations:

$$d_k^f \in \left[ D_{min,k}^f, D_{max,k}^f \right], \qquad k \ge 1$$

For every flight and every dedicated waypoint, we calculate minimum and maximum target times $\left[ T_{min,k}^f, T_{max,k}^f \right]$ starting from the entry waypoint:

$$T_{min,k}^f = ETO^f + \sum_{n=1}^{k} D_{min,n}^f, 1 \le k \le N$$

$$T_{max,k}^f = ETO^f + \sum_{n=1}^{k} D_{max,n}^f, 1 \le k \le N - 2$$

$$T_{max,k}^f = \infty, N - 1 \le k \le N$$

In case a flight got an issued target time that leads to a situation where the target landing time (RTO) is earlier than the minimum landing time $RTO^f < T_{min,N}^f$ the RTO will be set to the minimum landing time: $RTO^f = T_{min,N}^f$.

The target flight duration is constrained by the difference between RTO and ETO; i.e. whole runway delay shall be absorbed within the remaining route after the last frozen point: $T_N^f = RTO^f$ or, alternatively,

$$ETO^f + h^f + \sum_{n=1}^{N} d_n^f = RTO^f$$

Based on configuration, the flight speed for some segments shall be less or equal than the speed in the previous segment:

$$\frac{L_k}{d_k^f} \le \frac{L_{k-1}}{d_{k-1}^f}, \qquad k \ge 2$$

This constraint can only be applied if $\frac{L_k}{D_{max,k}^f} \le \frac{L_{k-1}}{D_{min,k-1}^f}$. If this condition is not satisfied for a certain dedicated waypoint k, the corresponding speed constraint will be omitted.

The actual separation between flights (f is successor, p is predecessor) is a sum of optimized separation $s_k^f$ and optional separation $m_k^f$ related to the flight f. The term $m_k^f$ is greater than zero only if the distance between flights is greater than the desired separation, i.e. if a "natural gap" exists. For aircraft on the same routes target times are required to ensure time separation is maintained throughout:

$$T_k^f - T_k^p = s_k^f + m_k^f,\ 1 \le k < N$$
$$m_k^f \ge 0$$

This constraint shall only be applied if minimum and maximum target times allow the required order for these flights: $T_{max,k}^f > T_{min,k}^p$ The separation $s_k^f$ shall only be optimized up to a desired minimum separation $\hat{S}_k$. Therefore, the optimized separation is constrained by:

$$s_k^f \in [0, \hat{S}_k],$$

where $\hat{S}_k$ is the desired minimum separation at dedicated waypoint k.

In case a flight got an issued target time that leads to an overtaking situation with another flight, the separation constraint cannot be satisfied any longer. In that case the corresponding constraint will be omitted.

The following cost function is utilized:

Primary Optimization Goal - Find target times for the dedicated waypoints to sequence arrivals on all route points so that least use of vertical separation is required i.e. as many flights as possible are time separated though the airspace. In order to achieve this, we maximize the separation up to the desired minimum separation for every flight f:

$$\sum_{n=1}^{N} (\hat{S}_n - s_n^f) \to min$$

Secondary Optimization Goal - The holding durations shall be minimized and the holding delay shall be moved to route segments:

$$\sum_{j=1}^{M} h^j \to min$$

Third Optimization Goal - To retain a natural gap between two flights the target times for every flight and dedicated waypoint shall be pushed in the direction of the preferred ETO by minimizing:

$$\sum_{n=1}^{N} |ETO_n^f - T_n^f| \to \min$$

We can then couple all these minimization terms using weighting factors $c_1, c_2, c_3 \geq 0$:

$$c_1 \sum_{j=1}^{M} \sum_{n=1}^{N} P_n(\hat{S}_n - s_n^j) + c_2 \sum_{j=1}^{M} h^j + c_3 \sum_{j=1}^{M} \sum_{n=1}^{N} |ETO_n^j - T_n^j| \to \min$$

Where $P_n$ is a configured individual penalty factor for every dedicated waypoint. Here $c_1 \gg c_2$ guarantees that the separation is maximized with higher priority compared to retaining the natural gap.

**Claims**

1. A computer-implemented method (100) for optimizing a stream of at least two aircraft (200a, 200b) forming at least one aircraft pair (202), wherein each aircraft (200a, 200b) enters a predefined environment (204), in particular an airspace (204), via an individual or common entry waypoint (206) and wherein the aircraft (200a, 200b) approach a common predefined merging waypoint (208), the method (100) comprising:

   - receiving (102) an estimated entry time (ETO) for each aircraft (200a, 200b) at the at least one entry waypoint (206),
   - receiving (104) a target time (RTO) for each aircraft (200a, 200b) to arrive at the merging waypoint (208), wherein said target time (RTO) comprises a delay (D) to be absorbed before reaching said merging waypoint (208),
   - receiving (106) routing information for each aircraft (200a, 200b) comprising waypoints for routing said aircraft (200a, 200b) from the entry waypoint (206) to the merging waypoint (208), wherein the waypoints comprise at least one dedicated waypoint (210),
   - defining (108) a desired minimum time based separation ($\hat{S}_k$) for each pair of aircraft (202), and
   - determining (110) optimized target arrival times ($T_k$), in particular target overflight times ($T_k$), at the one or more dedicated waypoints (210) for the at least two aircraft (200a, b) utilizing an optimization model (214) considering the estimated entry time (ETO), the target time for each aircraft to arrive at the merging waypoint (RTO) and the desired minimum time based separation ($\hat{S}_k$), wherein the optimized target arrival times ($T_k$) are determined such that the delay (D) to be absorbed for each aircraft (200a, 200b) is shared between route segments defined by said dedicated waypoints (210),

   **characterized in that** the optimization model (214) utilizes the desired minimum time based separation ($\hat{S}_k$) as a soft constraint (226),
   wherein the optimization model (214) considers maximizing a time based separation ($s_k$) between each aircraft pair (202) at the one or more dedicated waypoints (210) considering the desired minimum time based separation ($\hat{S}_k$) as a first optimization goal (216),
   and wherein the time based separation ($s_k$) is maximized only up to the predefined desired separation ($\hat{S}_k$).

2. The method (100) according to claim 1,
   wherein the merging waypoint (208) is a destination airport (212).

3. The method (100) according to any of the preceding claims,
   wherein the optimization model (214) furthermore considers one or more holding procedure durations (h) for the one or more aircraft (200a, 200b), wherein the holding procedure durations (h) are used to delay said aircraft (200a, 200b), and wherein the optimization model (214) considers minimizing said holding procedure durations (h) as a second optimization goal (218).

4. The method (100) according to any of the preceding claims,

   wherein said method (100) further comprises receiving a preferred overflight time ($ETO_k$) for the at least one dedicated waypoint (210),
   and wherein the optimization model (214) furthermore considers the minimization of the difference between the preferred overflight time ($ETO_k$) and the target arrival time ($T_k$) at a certain dedicated waypoint (210) as a third optimization goal (220).

5. The method (100) according to any of the preceding claims,
wherein the optimization model (214) furthermore comprises a cost function (222), wherein said cost function (222) is configured for balancing some or all of said optimization goals (216, 218, 220) with respect to one another, in particular by utilizing weighting factors ($c_1$, $c_2$, $c_3$) associated with said optimization goals (216, 218, 220).

6. The method (100) according to any of the preceding claims,
wherein the optimization model (214) further considers maximum and minimum flight durations and/or adjusted maximum and minimum flight durations between dedicated waypoints (210) as a further constraint (224).

7. The method (100) according to claim 6,
wherein the maximum and minimum flight durations are determined by utilizing an aircraft's (200a, 200b) maximum acceleration trajectory and/or a minimum clean trajectory, in particular received from the base of aircraft data (BADA).

8. The method (100) according to claim 6 or 7,

wherein an adjusted maximum flight duration is calculated by utilizing the determined maximum flight duration and an additional configurable time to lose,
and/or
wherein an adjusted minimum flight duration is calculated by utilizing the determined minimum flight duration and an additional configurable time to gain.

9. The method (100) according to any of the preceding claims,
wherein the target arrival times ($T_k$) at the one or more dedicated waypoints (210) are recalculated.

10. The method (100) according to claim 9,
wherein target arrival times for one or more aircraft (200a, 200b) at one or more dedicated waypoints (210) are excluded from a recalculation, in particular wherein target arrival times ($T_k$) associated with dedicated waypoints (210) are excluded from a recalculation when a dedicated waypoint (210) has already been overflown.

11. The method (100) according to any of the preceding claims,
wherein the optimization model (214) considers a decrease in aircraft speed from the entry waypoint to the merging waypoint as a further constraint (224).

12. A device (227) for optimizing a stream of at least two aircraft (200a, 200b) forming at least one aircraft pair (202), wherein each aircraft (200a, 200b) enters a predefined environment (204), in particular an airspace (204), via an entry waypoint (206) and wherein the aircraft (200a, 200b) approach a common predefined merging waypoint (208), comprising a processing unit (228), in particular a microprocessor (228), wherein a method (100) according to at least one of claims 1 to 11 is implemented on the processing unit (228).

13. Computer program (230) which when executed on a computer, causes the computer to carry out the method (100) according to any of claims 1 to 11.

**Patentansprüche**

1. Computerimplementiertes Verfahren (100) zum Optimieren eines Stroms von mindestens zwei Flugzeugen (200a, 200b), die mindestens ein Flugzeugpaar (202) bilden, wobei jedes Flugzeug (200a, 200b) über einen individuellen oder gemeinsamen Eintrittswegpunkt (206) in eine vordefinierte Umgebung (204), insbesondere einen Luftraum (204), eintritt und wobei sich die Flugzeuge (200a, 200b) einem gemeinsamen vordefinierten zusammenführenden Wegpunkt (208) annähern, wobei das Verfahren (100) umfasst:

- Empfangen (102) einer geschätzten Eintrittszeit (ETO) für jedes Flugzeug (200a, 200b) an dem mindestens einen Eintrittswegpunkt (206),
- Empfangen(104) einer Zielzeit (RTO) für jedes Flugzeug (200a, 200b) für die Ankunft an dem zusammenführenden Wegpunkt (208), wobei die Zielzeit (RTO) eine Verzögerung (D) umfasst, die vor dem Erreichen des Wegpunktes (208) zu absorbieren ist,

- Empfangen (106) von Streckenführungsinformationen für jedes Flugzeug (200a, 200b), die Wegpunkte zum Leiten des Flugzeugs (200a, 200b) von dem Eintrittswegpunkt (206) zu dem zusammenführenden Wegpunkt (208) umfassen, wobei die Wegpunkte mindestens einen dedizierten Wegpunkt (210) umfassen,

- Definieren (108) eines gewünschten zeitlichen Mindestabstands ($\hat{S}_k$) für jedes Flugzeugpaar (202), und

- Bestimmen (110) optimierter Zielankunftszeiten (Tk), insbesondere Zielüberflugzeiten (Tk), an dem einen oder den mehreren dedizierten Wegpunkten (210) für die mindestens zwei Flugzeuge (200a, b) unter Verwendung eines Optimierungsmodells (214), das die geschätzte Eintrittszeit (ETO), die Zielzeit für jedes Flugzeug für die Ankunft an dem zusammenführenden Wegpunkt (RTO) und den gewünschten zeitlichen Mindestabstand ($\hat{S}_k$) berücksichtigt, wobei die optimierten Zielankunftszeiten (Tk) so bestimmt werden, dass die Verzögerung (D), die für jedes Flugzeug (200a, 200b) zu absorbieren ist, zwischen Routensegmenten, die durch die dedizierten Wegpunkte (210) definiert sind, aufgeteilt wird,

**dadurch gekennzeichnet, dass** das Optimierungsmodell (214) den gewünschten zeitlichen Mindestabstand ($\hat{S}_k$) als eine weiche Randbedingung (226) verwendet,

wobei das Optimierungsmodell (214) das Maximieren eines zeitlichen Abstands (sk) zwischen jedem Flugzeugpaar (202) an dem einen oder den mehreren dedizierten Wegpunkten (210) unter Berücksichtigung des gewünschten zeitlichen Mindestabstands ($\hat{S}_k$) als ein erstes Optimierungsziel (216) erachtet,

und wobei der zeitliche Abstand (sk) nur bis zum vordefinierten gewünschten Abstand ($\hat{S}_k$) maximiert wird.

2. Verfahren (100) nach Anspruch 1,
wobei der zusammenführende Wegpunkt (208) ein Zielflughafen (212) ist.

3. Verfahren (100) nach einem der vorangehenden Ansprüche,
wobei das Optimierungsmodell (214) darüber hinaus eine oder mehrere Warteverfahrensdauern (h) für das eine oder die mehreren Flugzeuge (200a, 200b) berücksichtigt, wobei die Warteverfahrensdauern (h) verwendet werden, um das Flugzeug (200a, 200b) zu verzögern, und wobei das Optimierungsmodell (214) das Minimieren der Warteverfahrensdauern (h) als ein zweites Optimierungsziel (218) erachtet.

4. Verfahren (100) nach einem der vorangehenden Ansprüche,

wobei das Verfahren (100) des Weiteren das Empfangen einer bevorzugten Überflugzeit (ETOk) für den mindestens einen dedizierten Wegpunkt (210) umfasst,
und wobei das Optimierungsmodell (214) darüber hinaus die Minimierung der Differenz zwischen der bevorzugten Überflugzeit (ETOk) und der Zielankunftszeit (Tk) an einem gewissen dedizierten Wegpunkt (210) als ein drittes Optimierungsziel (220) erachtet.

5. Verfahren (100) nach einem der vorangehenden Ansprüche,
wobei das Optimierungsmodell (214) darüber hinaus eine Kostenfunktion (222) umfasst, wobei die Kostenfunktion (222) dazu eingerichtet ist, einen Ausgleich zwischen einigen oder allen der Optimierungsziele (216, 218, 220) herbeizuführen, insbesondere unter Verwendung von Gewichtungsfaktoren (c1, c2, c3), die mit den Optimierungszielen (216, 218, 220) verknüpft sind.

6. Verfahren (100) nach einem der vorangehenden Ansprüche,
wobei das Optimierungsmodell (214) des Weiteren maximale und minimale Flugdauern und/oder justierte maximale und minimale Flugdauern zwischen dedizierten Wegpunkten (210) als eine weitere Randbedingung (224) berücksichtigt.

7. Verfahren (100) nach Anspruch 6,
wobei die maximalen und minimalen Flugdauern unter Verwendung einer Flugbahn mit maximaler Beschleunigung eines Flugzeugs (200a, 200b) und/oder einer minimalen störungsfreien Flugbahn bestimmt werden, die insbesondere aus der Datenbank für Flugzeugdaten (BADA) empfangen werden.

8. Verfahren (100) nach Anspruch 6 oder 7,

wobei eine justierte maximale Flugdauer unter Verwendung der bestimmten maximalen Flugdauer und eines zusätzlichen konfigurierbaren Zeitverlusts berechnet wird,
und/oder
wobei eine justierte minimale Flugdauer unter Verwendung der bestimmten minimalen Flugdauer und eines zusätzlichen konfigurierbaren Zeitgewinns berechnet wird.

9. Verfahren (100) nach einem der vorangehenden Ansprüche,
wobei die Zielankunftszeiten (Tk) an dem einen oder den mehreren dedizierten Wegpunkten (210) neu berechnet werden.

10. Verfahren (100) nach Anspruch 9,
wobei Zielankunftszeiten für ein oder mehrere Flugzeuge (200a, 200b) an einem oder mehreren dedizierten Wegpunkten (210) von einer Neuberechnung ausgeschlossen sind, wobei insbesondere Zielankunftszeiten (Tk), die mit dedizierten Wegpunkten (210) verknüpft sind, von einer Neuberechnung ausgeschlossen sind, wenn ein dedizierter Wegpunkt (210) bereits überflogen wurde.

11. Verfahren (100) nach einem der vorangehenden Ansprüche,
wobei das Optimierungsmodell (214) eine Verringerung der Geschwindigkeit des Flugzeugs vom Eintrittswegpunkt bis zum zusammenführenden Wegpunkt als eine weitere Randbedingung (224) berücksichtigt.

12. Vorrichtung (227) zum Optimieren eines Stroms von mindestens zwei Flugzeugen (200a, 200b), die mindestens ein Flugzeugpaar (202) bilden, wobei jedes Flugzeug (200a, 200b) über einen Eintrittswegpunkt (206) in eine vordefinierte Umgebung (204), insbesondere einen Luftraum (204), eintritt und wobei sich die Flugzeuge (200a, 200b) einem gemeinsamen vordefinierten zusammenführenden Wegpunkt (208) annähern, umfassend eine Verarbeitungseinheit (228), insbesondere einen Mikroprozessor (228), wobei ein Verfahren (100) nach mindestens einem der Ansprüche 1 bis 11 in der Verarbeitungseinheit (228) implementiert wird.

13. Computerprogramm (230), das, wenn es auf einem Computer ausgeführt wird, den Computer veranlasst, das Verfahren (100) nach einem der Ansprüche 1 bis 11 auszuführen.

**Revendications**

1. Procédé (100) mis en œuvre par ordinateur pour optimiser un flux d'au moins deux aéronefs (200a, 200b) formant au moins une paire d'aéronefs (202), dans lequel chaque aéronef (200a, 200b) entre dans un environnement prédéfini (204), en particulier un espace aérien (204), via un point de cheminement d'entrée (206) individuel ou commun et dans lequel l'aéronef (200a, 200b) s'approche d'un point de cheminement de convergence (208) prédéfini commun, le procédé (100) comprenant :

- la réception (102) d'une heure d'entrée estimée (ETO) pour chaque aéronef (200a, 200b) à l'au moins un point de cheminement d'entrée (206),
- la réception (104) d'un temps cible (RTO) pour que chaque aéronef (200a, 200b) arrive au point de cheminement de convergence (208), dans lequel ledit temps cible (RTO) comprend un retard (D) à absorber avant d'atteindre ledit point de cheminement de convergence (208),
- la réception (106) d'informations d'acheminement pour chaque aéronef (200a, 200b) comprenant des points de cheminement pour acheminer ledit aéronef (200a, 200b) du point de cheminement d'entrée (206) au point de cheminement de convergence (208), dans lequel les points de cheminement comprennent au moins un point de cheminement dédié (210),
- la définition (108) d'un espacement ($\hat{S}_k$) minimal en temps souhaité pour chaque paire d'aéronefs (202), et
- la détermination (110) d'heures ($T_k$) d'arrivée cibles optimisées, en particulier d'heures ($T_k$) de passage à la verticale cibles, aux un ou plusieurs points de cheminement dédiés (210) pour les au moins deux aéronefs (200a, b) en utilisant un modèle d'optimisation (214) prenant en compte l'heure d'entrée estimée (ETO), le temps cible (RTO) pour que chaque aéronef arrive au point de cheminement de convergence et l'espacement ($\hat{S}_k$) minimal en temps souhaité, dans lequel les heures ($T_k$) d'arrivée cibles optimisées sont déterminées de sorte que le retard (D) à absorber pour chaque aéronef (200a, 200b) soit partagé entre des tronçons de route définis par lesdits points de cheminement dédiés (210),
**caractérisé en ce que** le modèle d'optimisation (214) utilise l'espacement ($\hat{S}_k$) minimal en temps souhaité comme une contrainte douce (226),
dans lequel le modèle d'optimisation (214) prend en compte l'augmentation au maximum d'un espacement en temps ($\hat{S}_k$) entre chaque paire d'aéronefs (202) aux un ou plusieurs points de cheminement dédiés (210) en considérant l'espacement ($\hat{S}_k$) en temps minimal souhaité comme un premier objectif d'optimisation (216),
et dans lequel l'espacement en temps ($\hat{S}_k$) n'est augmenté au maximum que jusqu'à l'espacement ($\hat{S}_k$) souhaité prédéfini.

**2.** Procédé (100) selon la revendication 1,
dans lequel le point de cheminement de convergence (208) est un aéroport de destination (212).

**3.** Procédé (100) selon l'une quelconque des revendications précédentes,
dans lequel le modèle d'optimisation (214) prend de plus en compte une ou plusieurs durées de procédure d'attente (h) pour les un ou plusieurs aéronefs (200a, 200b), dans lequel les durées de procédure d'attente (h) sont utilisées pour retarder ledit aéronef (200a, 200b), et dans lequel le modèle d'optimisation (214) considère la réduction au minimum desdites durées de procédure d'attente (h) comme un deuxième objectif d'optimisation (218).

**4.** Procédé (100) selon l'une quelconque des revendications précédentes,

dans lequel ledit procédé (100) comprend en outre la réception d'une heure de passage à la verticale préférée ($ETO_k$) pour l'au moins un point de cheminement dédié (210),
et dans lequel le modèle d'optimisation (214) considère de plus la réduction au minimum de la différence entre l'heure de passage à la verticale préférée ($ETO_k$) et l'heure ($T_k$) d'arrivée cible à un certain point de cheminement dédié (210) comme un troisième objectif d'optimisation (220).

**5.** Procédé (100) selon l'une quelconque des revendications précédentes,
dans lequel le modèle d'optimisation (214) comprend de plus une fonction de coût (222), dans lequel ladite fonction de coût (222) est configurée pour équilibrer certains ou tous lesdits objectifs d'optimisation (216, 218, 220) les uns par rapport aux autres, en particulier en utilisant des facteurs de pondération ($c_1$, $c_2$, $c_3$) associés auxdits objectifs d'optimisation (216, 218, 220).

**6.** Procédé (100) selon l'une quelconque des revendications précédentes,
dans lequel le modèle d'optimisation (214) considère en outre des durées de vol maximales et minimales et/ou des durées de vol maximales et minimales ajustées entre des points de cheminement dédiés (210) comme une contrainte supplémentaire (224).

**7.** Procédé (100) selon la revendication 6,
dans lequel les durées de vol maximales et minimales sont déterminées en utilisant une trajectoire d'accélération maximale et/ou une trajectoire propre minimale d'un aéronef (200a, 200b), en particulier reçues à partir de la base de données d'aéronefs (BADA).

**8.** Procédé (100) selon la revendication 6 ou 7,

dans lequel une durée de vol maximale ajustée est calculée en utilisant la durée de vol maximale déterminée et un temps configurable additionnel à perdre, et/ou
dans lequel une durée de vol minimale ajustée est calculée en utilisant la durée de vol minimale déterminée et un temps configurable additionnel à gagner.

**9.** Procédé (100) selon l'une quelconque des revendications précédentes,
dans lequel les heures ($T_k$) d'arrivée cibles aux un ou plusieurs points de cheminement dédiés (210) sont recalculées.

**10.** Procédé (100) selon la revendication 9,
dans lequel des heures d'arrivée cibles pour un ou plusieurs aéronefs (200a, 200b) à un ou plusieurs points de cheminement dédiés (210) sont exclues d'un recalcul, en particulier dans lequel des heures ($T_k$) d'arrivée cibles associées à des points de cheminement dédiés (210) sont exclues d'un recalcul lorsqu'un point de cheminement dédié (210) a déjà été dépassé.

**11.** Procédé (100) selon l'une quelconque des revendications précédentes,
dans lequel le modèle d'optimisation (214) considère une diminution d'une vitesse d'aéronef du point de cheminement d'entrée au point de cheminement de convergence comme une contrainte supplémentaire (224).

**12.** Dispositif (227) pour optimiser un flux d'au moins deux aéronefs (200a, 200b) formant au moins une paire d'aéronefs (202), dans lequel chaque aéronef (200a, 200b) entre dans un environnement prédéfini (204), en particulier un espace aérien (204), via un point de cheminement d'entrée (206) et dans lequel l'aéronef (200a, 200b) s'approche d'un point de cheminement de convergence (208) prédéfini commun, comprenant une unité de traitement (228), en particulier un microprocesseur (228), dans lequel un procédé (100) selon au moins une des revendications 1 à 11 est mis en œuvre par l'unité de traitement (228).

**13.** Programme informatique (230) qui, lorsqu'il est exécuté sur un ordinateur, amène l'ordinateur à réaliser le procédé (100) selon l'une quelconque des revendications 1 à 11.

Fig. 1

Fig. 2

Fig. 3

Fig. 4

EP 4 050 584 B1

Fig. 5

EP 4 050 584 B1

227

228

Fig. 6

Fig. 7

Fig. 8

**EP 4 050 584 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150081198 A1
- EP 1428195 B1
- US 2013110388 A1
- CN 106781708 B
- WO 2017013387 A1